# EUROPEAN PATENT APPLICATION

(11) **EP 0 872 724 A2**
(43) Date of publication of application: **21.10.1998**
(21) Application number: 98830139.6
(22) Date of filing: 13.03.1998
(51) Int. Cl.: G01N 21/90

(54) **Method and apparatus for the external inspection of containers**

(30) Priority: 18.03.1997 IT PR970019
(71) Applicant: Logics & Control S.n.c. di Lottici Marco e C., 43100 Parma (IT)
(72) Inventor: Lottici, Marco, 43013 Pilastro Di Langhirano (Parma) (IT)
(74) Representative: Gotra, Stefano

(57) **Abstract**

The invention falls within the sector of methods and systems for the external inspection of containers.

The method involves acquisition of the image of the bottles, performed from a single recording zone, while said bottles move forwards rotating about themselves through a predetermined angle.

The system comprises means (5,6) for rotation of the bottles (2) through a predetermined angle, during their travel in a predetermined zone (12); means (13) which record the image of the lateral surface of said bottles (2) in said zone (12); and a PLC logic which processes said image so as to reconstruct the image of the lateral surface of each bottle (2).

## Description

The present invention relates to a method and an apparatus for the external inspection of containers.

Said method and apparatus are used, for example, for checking labels and capsules on bottles or for checking printed writing on phials, small bottles and cans. More generally, the field of application comprises analysis of the external appearance and selection of moving containers on conveying lines with a continuous flow of containers at a variable speed and random orientation of the containers.

Analysis of the external appearance consists in the recognition and discrimination between various components: shape of the container, colour, presence and position of labels, completeness of decorative effects, recognition of writing, codes and images, presence and orientation of caps.

US 4,691,231 discloses a bottle inspection system which envisages the use of three pairs of telecameras arranged at 60° opposite a conveyor belt on which bottles, arranged at a sufficient distance from one another so as not to cause interference of images, are supplied.

Behind the belt there is a wall for diffusion of the light emitted by lamps located behind said wall. As a result of the high number and arrangement of the telecameras, the image of a surface part of the bottle greater than 180° is obtained while the bottle is located in a certain position.

According to a variant, three pairs of telecameras are used, said telecameras being arranged parallel to one another, spaced and perpendicular to the conveyor belt and obtaining the image of individual bottles in three successive positions of the bottle, rotated with respect to one another. In this case spacing between the bottles is not necessary. Between one telecamera and the next one, the bottle is rotated by means of use of a movable side belt and a fixed rear counter-surface between which the bottle is gripped.

Said document, however, in both the embodiments described, requires the use of a plurality of telecameras which are positioned at a distance from one another, in order to obtain the necessary information on the labels.

The patent EP 0,415,154 discloses a device for inspecting objects, which comprises an entry conveyor opposite which there is a first inspection station, an exit conveyor opposite which there is a second inspection station, and a middle conveyor opposite which there is a station for inspecting the bottom of the objects. The middle conveyor comprises two parallel-belt conveyors which are moved at different speeds so as to cause rotation of the objects about themselves during feeding.

This patent also teaches the use of several telecameras arranged at a distance from one another. During checking of the labels and the capsules of the bottles in order to assess the correct positioning and absence of defects on said labels or capsules, a particularly important need is to reduce the complexity of the machines and the procedures required for the abovementioned operations.

A typical problem of the known art consists in the distorsion and deformation of the image along the edges of the bottle owing to the curvature of the surface of the bottle, which results in the need for software reconstruction of the image, which is complicated, however, by the limited amount of information available.

Another cause for the lack of precision in the image consists in possible lateral displacements of the bottle during conveying of the same, said displacements causing a variation in the distance between bottles and telecameras. This may be resolved with the installation of lateral guides which, however, must be adjusted and varied every time there is a variation in the type and shape or size of the bottles to be checked.

Another problem is posed by the presence of gold or silver-coloured labels which cause undesirable light reflection phenomena which cannot always be solved by simply adopting special filters.

A further drawback, in the case of several telecameras monitoring simultaneously a same bottle from different angles, consists in the need to arrange the bottles at a considerable distance from each other in order to prevent adjacent bottles from disturbing the image (as a result of non-visible zones or the impossibility of processing the image owing to superimposition of the objects to be inspected), as is the case, for example, of Patent Application No. PR94A000011 which illustrates an inspection device which enables the image of the entire lateral surface of an object to be acquired simultaneously. This acquisition is performed by means of a plurality of telecameras arranged around the object or by means of a single telecamera and a plurality of reflection mirrors arranged so as to reflect simultaneously into the telecamera the image of the entire lateral surface of the object.

This device, however, results in the need for inspection of bottles arranged at a sufficient distance from one other and requires diffused lighting uniformly distributed over the whole of the space around the object, which is difficult to achieve technically.

Some plants are provided with a telecamera which records from above the image of the bottle so as determine the orientation thereof and cause movement of a pair of side belts between which the bottle is rotated until it assumes the desired position, in alignment with a further telecamera which checks the label frontally. This plant, however, requires bottles which are provided with a reference identification element which can be detected from above and moreover the front telecamera is unable to record a sufficiently broad image of the surface of the bottle.

The object of the present invention is to eliminate the aforementioned drawbacks and provide a simplified inspection method and apparatus which allow, with a single telecamera or with a plurality of telecameras having, however, the same position, the image of the entire external surface of the bottle or the container to be recorded correctly.

A further object is that of allowing the aforementioned recording of the image of the entire external surface of the container even with the containers arranged closed together, and not at a distance from one another.

Said objects are fully achieved by the method and the apparatus which form the subject of the present invention and which are characterized by the contents of the claims indicated below.

The method involves acquisition of the image of the containers, performed from a single recording zone, while the said containers move forwards, rotating about themselves through a predetermined angle, greater than 360° and preferably comprised between 380° and 420°. The single recording zone acquires the image of the entire travel area in which the container performs rotation about itself through the predetermined angle. This is performed by means of recording of a plurality of successive images of said area inside which the container advances and rotates about itself.

The apparatus comprises means for rotation of the containers through a predetermined angle, during their travel in a predetermined zone; means which detect the image of the lateral surface of said containers in said zone; and a PLC logic which processes said image in order to reconstruct the image of the lateral surface of each container.

These and other characteristic features will emerge more clearly from the following description of a preferred embodiment illustrated, purely by way of a non-limiting example, in the accompanying illustrative plates, in which:
- Figure 1 shows a plan view of the apparatus;

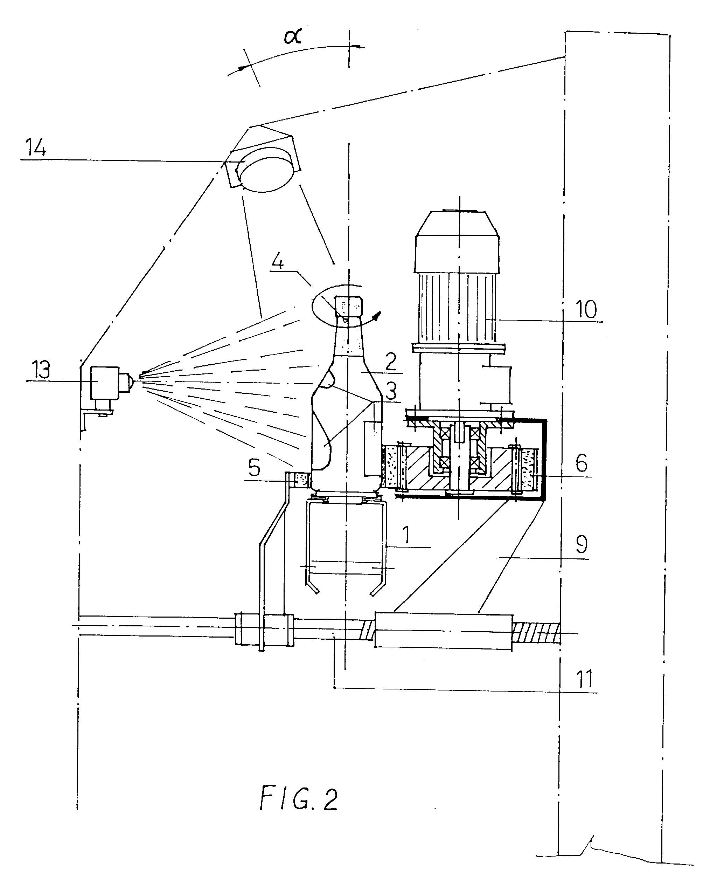

- Figure 2 shows a side view of the apparatus with a bottle, in the direction of feeding of the bottle inside the apparatus.

With reference to the Figures, 1 denotes a conveyor, only schematically illustrated in that it is of the known type, which performs feeding of a plurality of bottles or containers 2 provided with one or more labels 3 and if necessary with a capsule 4, the correct positioning and correct application of which must be monitored.

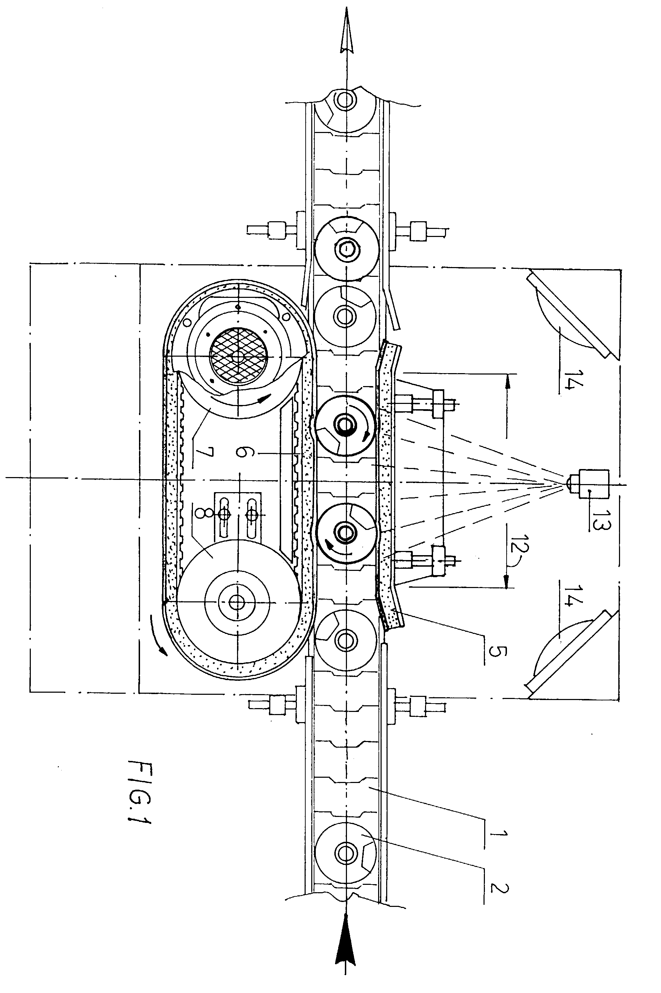

The bottles may be fed, arranged at a predetermined distance or close to one another, or (as in Figure 1) arranged at a random distance from one another and oriented in a random manner.

The bottles 2, in the zone where the present apparatus operates, are compressed laterally between a fixed wall 5 and at least one moving belt 6 which travels on a pair of pulleys 7 and 8, one of which is driven by means of a motor reducer 10 keyed onto the shaft of the pulley 7.

The pulleys 7 and 8 are mounted on a fixed frame 9, which is preferably secured to a framework 11 supporting the conveyor 1.

The speed of the moving belt 6 is such as to cause the bottle 2 to perform a complete rotation through a predetermined angle during feeding of the bottle along a path section, denoted by 12, where it is in contact with the moving belt.

Said predetermined angle, when it is required to record the entire lateral surface of the bottle, is greater than 360°, and preferably comprised between 380° and 420°, in order to take account of the viewing angle of recording means consisting of one or more telecameras 13 and so that the entire lateral surface of the bottle to be inspected is accessible.

The moving belt must rotate in the same direction as the conveyor 1, but at a speed which is different and preferably at least twice the feed speed of the conveyor 1.

As an alternative to the wall 5, which is made of sufficiently rough material to allow rotation of the bottles by means of friction, it is possible to use a second moving belt rotating in the same direction or in the opposite direction with respect to the first belt, at an adjustable speed.

In this way it is possible to produce the entire rotation of the bottle in a smaller path section, resulting in a greater reading resolution for the same telecamera used.

A single telecamera 13 (in the example illustrated) records in fact an image field equal to the aforementioned path section 12 of the bottle.

In particular the telecamera 13 records successive images of the section 12 and the bottles passing along it so that from the succession of said images it is possible to reconstruct, by means of a PLC, the image of the entire lateral surface of each bottle.

The bottles, in fact, in the path section 12 advance rotating about their axes.

Illumination of the bottle, in the case, for example, of cylindrical containers, is performed using illumination devices 14 with a low angle of illumination, preferably with an angle α less than 30°, namely almost parallel to the axis of the bottle, which illuminate the bottle itself on one side only.

According to a variation of embodiment not illustrated, it is possible to provide, if necessary, moving belts acting on the neck of the bottle rather than on the body, or in addition to the moving belts acting on the body.

This is of particular use especially in the case of non-cylindrical bottles which have a particular shape.

It is obvious, however, that the moving belts will be positioned so as to act on the superficial parts of the bottle not covered by labels and in any case devoid of characteristic elements on which inspection is to be performed.

The moving belt 6, together with the wall 5 or with the other moving belts, forms means for rotation of the bottles through a predetermined angle, during feeding thereof in the section or zone 12.

The present method therefore envisages the use of a single telecamera which acquires the image of the entire lateral surface during a complete rotation of the latter performed during feeding on a conveyor belt and hence without the need for stopping production, as in the case, on other hand, of conventional plants in which the complete image was acquired only with the bottle rotating through 360° on a disk without feeding.

Moreover, since acquisition of the image is performed from a single fixed zone and during successive stages, it is possible to inspect also bottles which are supplied very close to one another.

In the case where a complete rotation through 360° is not required, for example because the label is only on one side of the bottle, it is possible to adjust the speed of the moving belt 6 so that the bottle performs a rotation through only 60° or 45° with a proportional increase in definition of the image.

In order to increase the definition of the image it is possible to use several telecameras arranged alongside and/or above one another.

For example, instead of using a single telecamera with a resolution of 256x256 dots, it is possible to arrange alongside one another two identical telecameras of 256x256 dots so as to obtain an overall resolution of 512x256.

With another two telecameras arranged above the preceding ones, i.e. with a total of four telecameras of 256x256, a resolution of 512x512 is obviously obtained, which is also obtainable with a single telecamera of 512x512.

It is essential, however, that the means for recording the image of the bottles, consisting of a single telecamera or of several telecameras, should be positioned in the same image acquisition zone so as to behave, in the case of several telecameras, in the manner of single telecamera with greater resolution.

Some components of the synchronism electronics have not been described or illustrated since they are well-known to the person skilled in the art, such as the bottle loading photocells, the conveyor encoder for following the displacement of the bottle along its path, or the encoder for driving the transmission belts, which compensates for any slipping of the bottle.

Moreover, an expulsion device of the known type, for removing the bottles which are not considered suitable, is obviously also provided.

According to the present method, therefore, during rotation of the bottle, a certain number of images of the lateral surface of the bottle which can be seen by the telecamera are "captured" and these images are transferred to a processing board so that the following analysis may be performed:
- identification of the external edges of the bottles, with correction of any errors due to imprecision of the encoder or sudden variations in speed;
- cutting of a "slice" of the bottle in the central zone with correction of any variations in inclination of the axis;
- geometric processing of said slice so as to reconstruct on a flat surface the original extension of the curved surface projected onto the CCD of the telecamera;
- arrangement of said image slice alongside other already acquired slices of the same bottle, using as the criterion the possibility of superimposing a small portion of the vertical edge;
- processing of the whole lateral surface (after obtaining a sufficient number of images for ensuring coverage of the bottle through 360°), for example in accordance with one of the following criteria;
   A) in bottles for which there is a very high repeatability of external appearance, the reconstructed image is compared directly with a sample image stored in the memory: if the difference between the two images should be less than a predetermined maximum limit, the bottle is accepted, otherwise it is rejected.
   B) In bottles for which there is a low repeatability of external appearance, each component of the external appearance is identified, comparing it with a sample image stored in the memory, so as to have in the memory an image for each element (label or decorative effect) previously defined during acquisition of the shape or size.

If the number of total differences for all the various components should be less than a maximum predetermined number, the bottle is accepted, otherwise it is rejected.

By means of the PLC logic it is possible to reconstruct the total image (formed by the sum of the individual photograms recorded during the path section 12) and compare them with a sample image as described above, or else it is possible to compare the single photogram with the sample image (without performing any software reconstruction) in order to obtain information on the bottle part relating to that photogram and therefore know with which sample images comparison of the successive photograms must be performed.

According to another variation of embodiment, not shown, one or more telecameras are used, which telecameras are positioned in a single fixed common location and each of which follows the bottle along the path section 12 so that the reading field of each telecamera coincides substantially with the field occupied by the bottle. In this way it is possible to obtain greater resolution, at the price, however, of greater constructional complexity of the apparatus.

The present inspection method may also be used in the case of non-linear conveyors and in particular in the case of containers which are transported, each on its own rotating support disk, on the periphery of a rotating platform, such as those used, for example, for rotating labelling machines.

In this case, images of a certain angular field which normally embraces several disks and hence several containers are recorded from a single recording zone.

In this angular recording field, the containers move forwards with the platform while rotating on their own disk through a predetermined angle.

## Claims

1. Method for the external inspection of containers which are fed continuously with a random orientation on a conveyor or continuously on the periphery of a rotating platform, each on its own support disk and which are inspected by means of telecameras, characterized in that it involves acquisition of the image of the containers, performed from a single recording zone, while said containers advance rotating about themselves through a predetermined angle.

2. Method according to Claim 1, in which said angle is comprised between 180° and 420°.

3. Method according to Claim 1, in which during acquisition of the image the containers undergo illumination in a direction forming with the axis of the containers an angle α less than 30°.

4. Method according to Claim 1, in which a single recording zone acquires the image of the entire travel field in which the container performs rotation about itself through the predetermined angle, said acquisition occurring by means of recording of a plurality of successive images of said field inside which the container advances and rotates about itself.

5. Apparatus for the external inspection of containers, comprising a conveyor (1) for the continuous feeding of the containers oriented in a random manner, characterized in that it comprises in combination:
- means (5,6) for rotation of the containers (2) through a predetermined angle, during their travel in a predetermined zone (12);
- means (13) which detect the image of the lateral surface of said containers (2) in said zone (12);
- a PLC logic which processes said image so as to reconstruct the image of the lateral surface of each container (2).

6. Apparatus according to Claim 5, in which said means for rotation of the containers consist of a fixed wall (5) and a moving belt (6) between which the containers are compressed so as to produce rotation thereof during feeding on the conveyor (1).

7. Apparatus according to Claim 5, in which said means for rotation of the containers consist of a pair of moving belts (6) between which the containers are compressed so as to produce rotation thereof during feeding on the conveyor (1).

8. Apparatus according to Claim 5, in which said means which record the image consist of a single telecamera (7) which records a plurality of successive images of the containers (2) by means of recording of a plurality of images of the zone (12).

9. Apparatus according to Claim 5, in which said means which record the image consist of one or more telecameras (7) installed in a oscillating manner in a common fixed location, so that each telecamera (7) follows a container during feeding of the container in the zone (12) so that the visual field of the telecamera substantially coincides with the field occupied by the image of the container.
